**Europäisches Patentamt**

**European Patent Office**

**Office européen des brevets**

(11) Veröffentlichungsnummer : **0 128 265
B1**

(12) **EUROPÄISCHE PATENTSCHRIFT**

(45) Veröffentlichungstag der Patentschrift :
**07.05.86**

(51) Int. Cl.⁴ : **B 65 G 65/48**, B 65 G 53/46

(21) Anmeldenummer : **84101630.6**

(22) Anmeldetag : **17.02.84**

(54) **Zellenradschleuse.**

(30) Priorität : **09.06.83 DE 3320930**

(43) Veröffentlichungstag der Anmeldung :
**19.12.84 Patentblatt 84/51**

(45) Bekanntmachung des Hinweises auf die Patenterteilung : **07.05.86 Patentblatt 86/19**

(84) Benannte Vertragsstaaten :
**BE DE FR GB**

(56) Entgegenhaltungen :
**POLYSIUS TEILT MIT, no. 90, August 1981, Jahrgang 34, Heft 5, POLYSIUS AG, Beckum-Neubeckum, Deutschland, Sonderdruck aus "Zement-Kalk-Gips", Bauverlag GmbH, Wiesbaden, L.T. SCHNEIDER, G. BLASCZYK, L. LOHNHERR, "Betriebsverfahren mit modernen Kohlenmahlanlagen-Kugel-Rollenmühlen", Seiten 260-667**

(73) Patentinhaber : **Krupp Polysius AG
Graf-Galen-Strasse 17
D-4720 Beckum (DE)**

(72) Erfinder : **Gudat, Gerhard, Dipl.-Ing.
Theodor-Naarmann-Strasse 35
D-4740 Oelde (DE)**
Erfinder : **Blascyk, Gotthardt, Dipl.-Ing.
Weidenweg 29
D-4720 Beckum (DE)**
Erfinder : **Wingenfeld, Friedrich, Ing. grad.
Zumdreschstrasse 12
D-4410 Warendorf (DE)**

(74) Vertreter : **Tetzner, Volkmar, Dr.-Ing. Dr. Jur.
Van-Gogh-Strasse 3
D-8000 München 71 (DE)**

Jouve, 18, rue St-Denis, 75001 Paris, France

## Beschreibung

Die Erfindung betrifft eine Zellenradschleuse entsprechend dem Oberbegriff des Anspruches 1.

Eine Zellenradschleuse dieser Gattung ist durch die Firmenzeitschrift « Polysius teilt mit » Nr. 90 (August 1981) Seite 4, Bild 6, bekannt.

Indem bei dieser Zellenradschleuse Heißgas durch den Strömungsraum zwischen der Rotorwelle und den Zellenwänden hindurchgeleitet wird, ergibt sich auch an der mit dem Schüttgut in Berührung kommenden anderen Seite der Zellenwände eine so hohe Oberflächentemperatur, daß störende Ansatzbildungen vermieden werden.

Der Erfindung liegt nun die Aufgabe zugrunde, eine Zellenradschleuse dieser Art dahin weiterzuentwickeln, daß die für die Beheizung der Zellenradschleuse benötigte Heißgasmenge minimiert wird.

Diese Aufgabe wird erfindungsgemäß durch die kennzeichnenden Merkmale des Anspruches 1 gelöst.

Die erfindungsgemäß auf der Seite der Heißgaszuführung und -abführung vorgesehenen ringförmigen Luftführungsblenden verhindern, daß Heißgas durch die Spalte zwischen den drehenden und feststehenden Teilen der Zellenradschleuse entweicht oder daß durch diese Spalte eine unerwünscht große Nebenluftmenge angesaugt wird.

Ein Ausführungsbeispiel der Erfindung ist in der Zeichnung näher veranschaulicht.

In der Zeichnung zeigen

Figur 1 einen hälftigen Längsschnitt durch eine erfindungsgemäße Zellenradschleuse ;

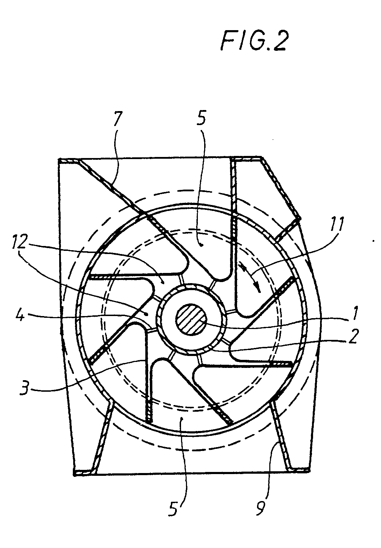

Figur 2 einen Querschnitt längs der Linie II-II der Fig. 1.

Die in der Zeichnung dargestellte Zellenradschleuse enthält auf einer Rotorwelle 1 einen zylindrischen Tragkörper 2, auf dem eine Anzahl von Zellwänden 3 mittels Stegen 4 befestigt sind. Die Zellwände 3 bilden nach außen offene Zellen 5, die zur Aufnahme des Schüttgutes dienen.

Das ortsfeste Gehäuse 6 enthält im oberen Bereich einen Gutaufgabetrichter 7, aus dem das Schüttgut in Richtung der Pfeile 8 in die gerade in der oberen Stellung befindliche Zelle 5 fällt. Weiterhin ist das Gehäuse 6 im unteren Bereich mit einer Gutaustrittsöffnung 9 versehen, durch die das Schüttgut in Richtung der Pfeile 10 aus der jeweils gerade in der unteren Stellung befindlichen Zelle 5 austritt. Die Drehrichtung des Rotors ist mit dem Pfeil 11 bezeichnet.

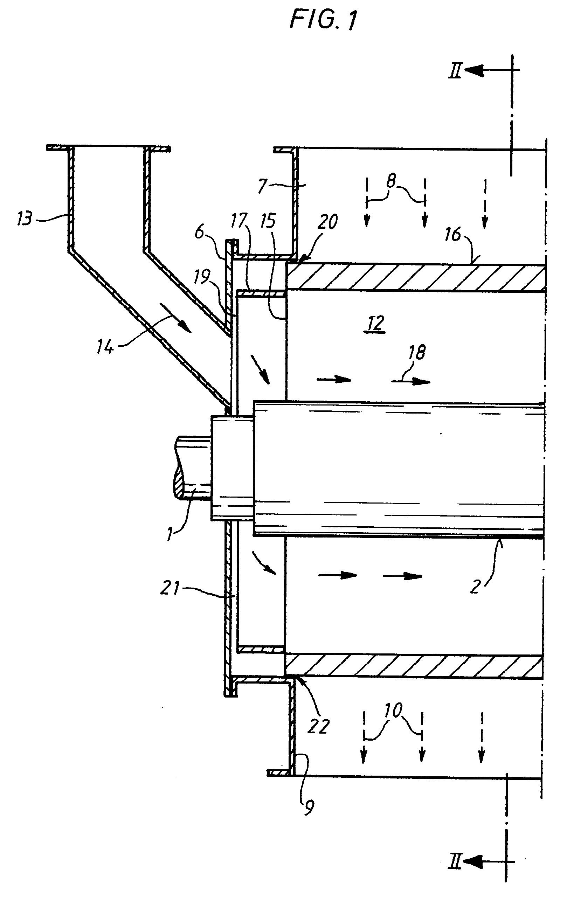

Zwischen dem mit der Rotorwelle 1 verbundenen Tragkörper 2 und den Zellenwänden 3 sind in axialer Richtung verlaufende Strömungsräume 12 vorhanden, die im Bereich der Stirnseiten des Rotors mit einer Heißgaszuführung bzw. einer Heißgasabführung verbunden sind. Da die beiden Stirnbereiche symmetrisch ausgebildet sind, ist in Fig. 1 lediglich die Stirnseite mit der Heißgaszuführung veranschaulicht.

In die Stirnwand des Gehäuses 6 mündet eine Heißgasleitung 13 ein, durch die Heißgas in Richtung des Pfeiles 14 strömt. Der axiale Raum zwischen der Stirnseite 15 des Rotors 16 und der Stirnwand des Gehäuses 6 ist durch eine ringförmige Luftführungsblende 17 in radialer Richtung nach außen abgeschirmt. Diese Luftführungsblende 17 ist drehfest mit dem Rotor 16 verbunden und nach der Stirnseite hin (d. h. zur Anschlußseite der Heißgasleitung 13) offen.

Das Heißgas strömt infolgedessen aus der Heißgasleitung 13 durch den von der Luftführungsblende 17 nach außen abgeschirmten Raum hindurch und gelangt dann in die Strömungsräume 12, die sie in Richtung der Pfeile 18 in axialer Richtung durchsetzt. Dabei steht das Heißgas in wärmeleitender Berührung mit der Innenseite der Zellwände 3, die dadurch wirksam beheizt werden. Nach dem Durchströmen der Strömungsräume 12 tritt das Heißgas am anderen stirnseitigen Ende des Rotors 16 aus und wird in gleichartiger Weise abgeführt. Auch dabei sorgt eine drehfest mit dem Rotor verbundene ringförmige Luftführungsblende für einen glatten, ungestörten Austritt des Gases aus der Zellenradschleuse.

Durch die im Bereich der Heißgaszuführung und -abführung vorgesehene ringförmige Luftführungsblende 17 wird vor allem verhindert, daß Heißgas durch die Spalte 19, 20 bzw. 21, 22 in die Bereiche des Gutaufgabetrichters 7 bzw. der Gutaustrittsöffnung 9 entweicht oder daß aus diesen Bereichen eine unerwünscht große Nebenluftmenge angesaugt wird. Die ringförmige Luftführungsblende 17 ermöglicht es somit, die für den Wärmeaustausch erforderliche Heißgasmenge zu minimieren und einen zu hohen Wärmeverlusten führenden Bypass-Strom zu vermeiden. Zugleich kann durch Verwendung der Luftführungsblende 17 die Gasgeschwindigkeit in den axialen Strömungsräumen 12 so gezielt beeinflußt werden, daß sich keine schädlichen Staubablagerungen in diesen Strömungsräumen ergeben.

## Patentansprüche

1. Zellenradschleuse, insbesondere für zu Anbackungen neigendes Schüttgut, mit einer Anzahl von in gleichmäßiger Umfangsteilung um die Rotorwelle (1) herum angeordneten Zellen (5) zur Aufnahme des Schüttgutes, wobei zwischen der Rotorwelle (1) und den Zellenwänden (3) wenigstens ein Strömungsraum (12) vorgesehen ist, der im Bereich der Stirnseiten (15) des Rotors (16) mit einer Heißgaszuführung (13) bzw. -abführung verbunden ist, dadurch gekennzeichnet, daß auf der Seite der Heißgaszuführung (13) und auf der Seite der Heißgasabführung der axiale Raum zwischen der Stirnseite (15) des Rotors (16) und der Stirnwand des Gehäuses (6) durch je eine ringförmige Luftführungsblende (17) in radialer Richtung nach außen abgeschirmt ist.

2. Zellenradschleuse nach Anspruch 1, dadurch gekennzeichnet, daß die Luftzuführungsblenden (17) drehfest mit dem Rotor (16) verbunden sind.

## Claims

1. Bucket wheel valve, especially for loose material which tends to cake together, with a number of cells (5) to receive the loose material arranged in regular peripheral distribution about the rotor shaft (1), in which at least one flow chamber (12) is provided between the rotor shaft (1) and the cell walls (3) and is connected in the region of the ends (15) of the rotor (16) to a hot gas supply (13) or a hot gas discharge, characterised in that on the side of the hot gas supply (13) and on the side of the hot gas discharge the axial space between the end (15) of the rotor (16) and the end wall of the housing (6) is in each case screened from the exterior in the radial direction by an annular air guide (17).

2. Bucket wheel valve as claimed in claim 1, characterised in that the air guides (17) are connected to the rotor (16) so as to be fixed against relative rotation.

## Revendications

1. Ecluse alvéolaire, plus particulièrement sas à alvéoles et notamment sas à roue cellulaire, en particulier pour matière en vrac tendant à former des incrustations ou à s'agglomérer, sas comprenant plusieurs alvéoles (5) formant une subdivision régulière de la circonférence autour de l'arbre (1) du rotor et destinés à recevoir la matière en vrac, au moins un volume d'écoulement (12) prévu entre l'arbre (1) du rotor et les cloisons (3) des alvéoles communiquant sur les côtés extrêmes (15) du rotor (16) d'une part avec une arrivée (13) et d'autre part avec une évacuation de gaz chaud, sas caractérisé en ce qu'un écran annulaire (17) de conduction d'air obture radialement à l'extérieur l'espace axial compris entre les côtés extrêmes (15) du rotor (16) et la cloison extrême de l'enveloppe (6) d'une part sur le côté de l'arrivée (13) et d'autre part sur le côté de l'évacuation du gaz chaud.

2. Ecluse et notamment sas à roue cellulaire selon la revendication 1, caractérisé en ce que les écrans (17) de conduction d'air sont solidarisés en rotation avec le rotor (16).

# FIG.1

0 128 265

*FIG.2*